# EUROPEAN PATENT APPLICATION

(11) **EP 4 303 271 A1**
(43) Date of publication of application: **10.01.2024**
(21) Application number: 22763282.5
(22) Date of filing: 01.03.2022
(51) Int. Cl.: C09C 3/10, C09D 17/00, C09D 11/17, B43K 7/01, B43K 8/02

(54) **COMPOSITE COLORED PARTICLES**

(30) Priority: 02.03.2021 JP 2021032429; 28.02.2022 JP 2022029620
(71) Applicant: MITSUBISHI PENCIL COMPANY, LIMITED, Tokyo 140-8537 (JP)
(72) Inventor: OGURA, Kosuke, Tokyo 140-8537 (JP)
(74) Representative: Vossius & Partner Patentanwälte Rechtsanwälte mbB
(86) International application number: PCT/JP2022/008691
(87) International publication number: WO 2022/186228

(57) **Abstract**

There is provided an ink composition that is excellent in anti-feathering and scratch resistance of markings and is suitable for industrial production. The present invention relates to: composite colored particles each including a resin particle carrying a positive electric charge on a particle surface and a pigment particle carrying a negative electric charge on a particle surface, the resin particle and the pigment particle forming a composite through electrostatic interaction; a water-based ink composition containing the composite colored particles dispersed in a water-based medium; and a writing instrument containing the water-based ink composition. Furthermore, the present invention relates to a method for producing composite colored particles, the method including forming a composite by mixing a resin emulsion containing resin particles each carrying a positive electric charge on a particle surface and a pigment dispersion containing pigment particles each carrying a negative electric charge on a particle surface.

## Description

### Technical Field

The present invention relates to composite colored particles for a writing instrument, and an ink composition containing the same.

### Background Art

As inks for a writing instrument, inks in which various dyes or pigments are dissolved or dispersed in a solvent as coloring materials are used. In particular, pigment ink is superior to dye ink in fastness of markings and concealment.

For an ink composition for a writing instrument, suppression of feathering of markings that may occur due to permeation into a material and good fastness of markings are required. For such a purpose, a composite powder in which pigment particles are attached or fixed to surfaces of resin particles by a mechanical force has been proposed.

For example, Patent Document 1 discloses an ink composition for a writing instrument including a colorant, a dispersant, and a water-based medium, in which the colorant is composite particles of spherical resin particles and a pigment. The composite particles are formed by grinding the resin particles and the pigment and bonding pigment particles to the resin particles softened by frictional heat generated at this time.

Patent Document 2 discloses a water-based pigment ink composition for a writing instrument including, as a coloring material, at least composite powder in which particulate titanium oxide having an average particle size of 0.1 µm or less is fixed to surfaces of resin particles of polyethylene, polypropylene, polymethyl methacrylate, or the like. The composite particles can be obtained by mixing the particulate titanium oxide with the resin particles, mixing and grinding the mixture by an automatic mortar, a ball mill, a jet mill, an atomizer, or the like, and/or applying a mechanical impact force by a hammer mill, a hybridizer, or the like to cause the particulate titanium oxide to be adsorbed on the surfaces of the resin particles or driven into the resin particles to be fixed thereto.

### Citation List

### Patent Document

Patent Document 1 : JP S63-218778 A
Patent Document 2 : JP H06-192611 A

### Summary of Invention

### Technical Problem

In a case of writing on a surface of a fibrous material such as cloth with a writing instrument, ink may permeate into the fibrous material and a phenomenon that the marking looks blurry often occurs. Furthermore, when rubbed, the marking may be erased or faded. Thus, the ink used for a writing instrument is required to have a performance to resist these. Furthermore, as writing instruments are the products that should be mass-produced as daily necessities, ink for use in writing instruments must be well-produced industrially.

However, composite particles obtained by mixing pigment particles and resin particles and applying a mechanical impact force such as grinding to the mixture to bond or fix the particles often contain a considerable amount of raw materials which remain in the form of fine particles without forming the composite, or even if they form a composite, the raw materials are easily separated from each other, and as a result, feathering of ink or the like inevitably occurs. In addition, the method of mechanically treating a solid to obtain a uniform solid requires relatively large power and treatment time, which is not suitable for industrial production. In particular, grinding tends to result in a product having non-uniform size and shape, and a non-uniform ink composition does not provide a good writing performance.

The present invention is directed to providing composite colored particles which are excellent in writing performance such as scratch resistance and starting characteristics of markings as well as prevention of feathering of markings and are suitable for industrial production, and to providing an ink composition in which the composite colored particles are dispersed.

### Solution to Problem

As a result of intensive studies, the present inventors have focused on the fact that fine particles constituting a pigment badly affect feathering of markings and the like, and have completed the present invention.

That is, the present invention relates to composite colored particles including resin particles each carrying a positive electric charge on a particle surface and pigment particles each carrying a negative electric charge on a particle surface, the resin particles and the pigment particles forming a composite through electrostatic interaction.

Furthermore, the present invention relates to a water-based ink composition in which the composite colored particles are dispersed in a water-based medium, and a writing instrument containing the water-based ink composition.

In addition, the present invention relates to a method for producing composite colored particles, the method including a composite forming process of mixing a resin emulsion containing resin particles each carrying a positive electric charge on a particle surface and a pigment dispersion containing pigment particles each carrying a negative electric charge on a particle surface.

Note that in the present invention, "carrying a positive (or negative) electric charge on a particle surface" means that a particle has a positive (or negative) electric charge at least on its surface and includes a case where only the particle surface has a positive (or negative) electric charge, and a case where both the particle surface and the inside of the particle have a positive (or negative) electric charge.

### Advantageous Effects of Invention

According to the present invention, there are provided composite colored particles which are excellent in prevention of feathering of markings and scratch resistance of markings and are suitable for industrial production, and an ink composition in which the composite colored particles are dispersed.

According to the present invention, there is provided a water-based ink type writing instrument excellent in writing performance.

### Brief Description of Drawings

FIG. 1 is a schematic view for explaining the present invention. FIG. 1 illustrates that a composite colored particle having a large particle size is composed through electrostatic interaction by combination of a resin particle carrying a positive electric charge on a particle surface with pigment particles each carrying a negative electric charge on a particle surface.
FIG. 2 is a particle-size frequency distribution diagram of a cation-modified vinyl acetate resin used in Example 1.
FIG. 3 is a particle-size frequency distribution diagram of anion-modified carbon black particles used in Example 1.
FIG. 4 is a particle-size frequency distribution diagram of composite colored particles A-1 before performing breaking-up in Example 1.
FIG. 5 is a particle-size frequency distribution diagram of the composite colored particles A-1 that were obtained by performing breaking-up in Example 1.

### Description of Embodiments

An embodiment of the present invention is described below in detail. However, in the present invention, components may be added or modified within a range that does not deviate from the gist of the present invention, and the technical scope of the present invention is not limited to the described embodiments and includes the invention described in the claims and equivalents thereof.

### Resin Particles

The resin particle used in the present invention is a resin particle carrying a positive electric charge on its particle surface (hereinafter, also referred to as cationic resin particle). Such a resin particle includes a polymer modified with a cationic group, and specific examples include a resin particle in which a positive electric charge is imparted by attaching or reacting a reagent to the resin particle, and a resin particle in which a monomer containing a functional group carrying a positive electric charge or a precursor thereof are allowed to coexist at the time of preparation of the resin particle and thus the formed polymer is cationized.

It is preferable that the resin particle to be used in the present invention mainly contains at least one type of a polymer selected from a vinyl acetate-based resin, an acrylic resin, and a urethane-based resin. The resin particle containing such a polymer and having a particle surface modified with a cationic group to have a positive charge is preferably used.

### Cationic Resin Particle of Vinyl Acetate-Based Resin

A cationic resin particle of a vinyl acetate-based resin is preferably a cationic resin particle containing a cationic emulsifying agent in a particle, a cationic resin particle containing a polymer having a cationic group, or a cationic resin particle containing a cationic monomer and copolymerized. Such a cationic resin particle is produced by using a cationic emulsifying agent, forming protective colloid using a polymer having a cationic group, or adding a cationic monomer to perform inverse emulsion polymerization, at the time of emulsion polymerization using a vinyl acetate monomer or a mixture of a vinyl acetate monomer and a comonomer that is copolymerizable with the vinyl acetate monomer, such as vinyl chloride or a (meth)acrylic monomer.

Preferably, the cationic resin particles of the vinyl acetate-based resin can be produced by emulsion polymerization using a cationic surfactant as a cationic emulsifying agent. Examples of the cationic surfactant include alkyl benzyl ammonium chloride, such as tetradecyl dimethyl benzyl ammonium chloride and octadecyl dimethyl benzyl ammonium chloride; alkyl pyridinium ammonium chloride, such as lauryl pyridinium chloride; tetraalkyl ammonium chloride, such as stearyl trimethyl ammonium chloride and dioleyl dimethyl ammonium chloride; EO addition type ammonium chloride having an alkyl group having 8 to 18 carbons and having the molar quantity of ethylene oxide addition of 2 to 15 times, such as alkyl bis(2-hydroxyethyl)methyl ammonium chloride and polyoxyethylene alkyl methylammonium chloride. The amount of the cationic surfactant used in the emulsion polymerization is preferably 1 to 10 parts by mass, and more preferably 2 to 5 parts by weight, per 100 parts by mass of the monomer.

Furthermore, after emulsion polymerization is performed with a nonionic surfactant, a cationic substance, such as a cationic surfactant, polyoxyethylene alkyl amine, polyethylenimine, etc. is added to produce cationic resin particles of a vinyl acetate-based resin.

Also, into a (meth)acrylic monomer, or into a mixture of the (meth)acrylic monomer and a styrene-based comonomer, an amino group-containing monomer, such as an N-substituted amino alkyl(meth)acrylate, which includes dimethylaminoethyl (meth)acrylate and diethylaminoethyl (meth)acrylate, or an N-substituted amino alkyl (meth)acrylamide, which includes dimethylaminopropyl (meth)acrylamide, is added and copolymerized, and then quaternized by an alkylating agent to produce cationic resin particles of a vinyl acetate-based resin. As the alkylating agent, an alkyl halide such as octyl chloride, octyl bromide, dodecyl chloride, dodecyl bromide, tetradecyl chloride, tetradecyl bromide, hexadecyl chloride, or hexadecyl bromide is used.

### Cationic Resin Particle of Acrylic Resin

A cationic resin particle of an acrylic resin is preferably a cationic resin particle containing a cationic emulsifying agent in the particle, a cationic resin particle containing a polymer having a cationic group, or a cationic resin particle containing a cationic monomer and copolymerized. Such s cationic resin particle is produced by using a cationic emulsifying agent, forming protective colloid using a polymer having a cationic group, or adding a cationic monomer to perform inverse emulsion polymerization, at the time of emulsion polymerization using a (meth)acrylic monomer, or a mixture of a (meth)acrylic monomer and a comonomer such as a styrene-based monomer that is copolymerizable with the (meth)acrylic monomer.

Preferably, the cationic resin particles of the acrylic resin can be produced by emulsion polymerization using a cationic surfactant as a cationic emulsifying agent. Examples of the cationic surfactant include alkyl benzyl ammonium chloride, such as tetradecyl dimethyl benzyl ammonium chloride and octadecyl dimethyl benzyl ammonium chloride; alkyl pyridinium ammonium chloride, such as lauryl pyridinium chloride; tetraalkyl ammonium chloride, such as stearyl trimethyl ammonium chloride and dioleyl dimethyl ammonium chloride; EO addition type ammonium chloride having an alkyl group having 8 to 18 carbons and having the molar quantity of ethylene oxide addition of 2 to 15 times, such as alkyl bis(2-hydroxyethyl)methyl ammonium chloride and polyoxyethylene alkyl methylammonium chloride. The amount of the cationic surfactant used in the emulsion polymerization is preferably 1 to 10 parts by mass, and more preferably 2 to 5 parts by weight, per 100 parts by mass of the monomer.

Alternatively, after emulsion polymerization is performed with a nonionic surfactant, a cationic substance, such as a cationic surfactant, polyoxyethylene alkyl amine, or polyethylenimine, is added to produce the cationic resin particles of the acrylic resin.

Furthermore, the cationic resin particles of the acrylic resin can be produced by quaternization by an alkylating agent after copolymerization is performed by adding an amino group-containing monomer such as N-substituted amino alkyl(meth)acrylate, such as dimethylaminoethyl (meth)acrylate or diethylaminoethyl (meth)acrylate, or an N-substituted amino alkyl (meth)acrylamide, such as dimethylaminopropyl (meth)acrylamide to a (meth)acrylic monomer or a mixture of a (meth)acrylic monomer and a styrene-based comonomer. As the alkylating agent, an alkyl halide such as octyl chloride, octyl bromide, dodecyl chloride, dodecyl bromide, tetradecyl chloride, tetradecyl bromide, hexadecyl chloride, or hexadecyl bromide is used.

### Cationic Resin Particle of Urethane-Based Resin

As the cationic resin particles of a urethane-based resin, cationic resin particles of a urethane-based resin having a quaternary ammonium group are preferred. For these cationic resin particles, for example, cationic resin particles of a urethane-based resin having a quaternary ammonium group can be produced by making a dispersion liquid of polyurethane by reacting a polyol, a polyisocyanate, and a tertiary amino group-containing polyol with or without a solvent, and then subjecting the tertiary amino group in the polyurethane to protonation by an acid or to quaternization by an alkylating agent.

As another production method, after a urethane prepolymer having an isocyanate group at a terminal is produced by reacting a predetermined ratio of a polyol, a polyisocyanate, and a tertiary amino group-containing polyol in a solvent or without a solvent, the chain of the urethane prepolymer is elongated with a polyamine, and a dispersion liquid of the urethane resin particles is produced. Then, the tertiary amino group in the urethane resin is subjected to protonation by an acid or to quaternization by an alkylating agent. Thus, the cationic resin particles of the urethane-based resin having the quaternary ammonium group are produced.

The alkylating agent for quaternization of the tertiary amino group is a reagent that forms a quaternary ammonium cation by adding an alkyl group to an amino group, and an alkyl halide such as octyl chloride, octyl bromide, dodecyl chloride, dodecyl bromide, tetradecyl chloride, tetradecyl bromide, hexadecyl chloride, or hexadecyl bromide is preferably used.

The cationic resin particles used in the present invention are preferably cationic resin particles having less content of fine particles and having a uniform particle size. Specifically, in the particle size distribution, at least 95% of the particles preferably have a particle size within a range of 0.1 µm to 3.0 µm, and at least 95% of the particles more preferably have a particle size of 0.1 µm to 2.0 µm.

Note that for the resin particles and the composite colored particles, the particle size distribution specified in the present invention is measured by a laser light diffraction/scattering method in accordance with JIS Z 8825:2013 with, for example, a particle size distribution analyzer MICROTRAC HRA9320-X100 (available from Nikkiso Co., Ltd.). The particle size distribution of the pigment particles is measured by a dynamic light scattering method in accordance with JIS Z 8828:2019 with, for example, a concentrated particle size analyzer FPAR-1000 (available from Otsuka Electronics Co., Ltd.).

### Pigment Particle

The pigment particle used in the present invention is a resin particle carrying a negative electric charge on a particle surface (hereinafter, also referred to as anionic pigment particle). As the pigment particle described above, a pigment particle formed of a solid pigment modified with an anionic group can be used.

As the anionic pigment particle, a particle containing an inorganic pigment as a main component and a particle containing an organic pigment as a main component can be used. Examples of the inorganic pigment include titanium oxide-based, iron oxide-based, metal powder-based, calcined substance-based, and extender-based pigments. Examples of the organic pigment include azo-based, phthalocyanine-based, quinacridone-based, anthraquinone-based, dioxadine-based, indigo/thioindigo-based, perinone/perylene-based, isoindolinone-based, aniline black-based, azo-methine azo-based, and carbon black-based pigments. A combination of an inorganic pigment and an organic pigment can be also used.

The pigment particle used in the present invention may have any particle size, but preferably has a particle size of 0.05 to 0.5 µm, and at least 95 mass% of pigment particles more preferably have a particle size in a range of 0.05 to 0.3 µm.

In the present invention, as the anionic pigment particle, an anionic pigment particle in which a reagent containing an anionic functional group (hereinafter, referred to as anionic group) or a precursor thereof is chemically bonded or physically attached to a particle surface of a pigment can be used. Also, as the anionic pigment particle, an anionic pigment particle in which an anionic group has been formed by subjecting the pigment particle surface to a chemical reaction can be used. Examples of the anionic group include a carboxyl group, a sulfonic acid group, and a phosphoric acid group.

In a case where an anionic group is chemically bonded to the particle surface of the pigment, the anionic group may be directly bonded to a compound constituting the pigment or may be bonded to a compound constituting the pigment via another atomic group interposing therebetween. Examples of another atomic group for indirectly bonding the anionic group and a compound constituting the pigment include straight-chain or branched alkylene groups having 1 to 12 carbon atoms, phenylene groups, naphthylene groups, carbonyl groups, ester groups, ether groups, amide groups, amino groups, azo groups, and sulfonyl groups.

In a case where the anionic group is physically attached to a particle surface of the pigment, the pigment surface is preferably treated with a dispersing agent, or the pigment surface is preferably covered with a resin.

An example of a method of surface-treating a pigment with a dispersing agent is a method, in which an anionic macromolecular dispersing agent is fed to a dispersion liquid of a pigment and thus the anionic macromolecular dispersing agent is allowed to attach to the pigment surface.

Examples of a method of covering a pigment with a resin include a method, in which an anionic monomer is fed to a dispersion liquid of a pigment and polymerized and thus the pigment surface is covered, and a method, in which a pigment is charged in a solution of an anionic resin, then a solvent is removed, and thus the pigment surface is covered.

In a case where an anionic group is formed on a particle surface by chemical treatment of a pigment, the anionic group is formed by a chemical reaction of the pigment. Examples of the acid group to be introduced to the pigment surface include a sulfonic acid group, a phosphoric acid group, a carboxyl group, and a hydroxy group.

The chemical treatment by which the anionic group is introduced to the pigment surface can be performed by a gas phase method, a liquid phase method, or a method combining these.

In a case where the oxidation treatment is performed by a gas phase method, examples thereof include a method in which a pigment, such as carbon black, is oxidized by being brought into contact with ozone or air as an oxidizing agent.

In a case where the oxidation treatment is performed by a liquid phase method, a hydrogen peroxide solution, nitric acid, sulfuric acid, chlorate, or persulfate can be used as the oxidizing agent, and for example, by charging a pigment in an aqueous solution containing the oxidizing agent, and performing a stirring treatment, a pigment having an acid group on a surface can be obtained. By controlling the used amount of the oxidizing agent and the reaction temperature, the acid group can be uniformly introduced to the surface of the pigment such as carbon black.

Further examples include methods of introducing an anionic group, such as a sulfonic acid group, a phosphoric acid group, or a carboxyl group, to a surface of a pigment such as carbon black by a coupling reaction by a diazonium salt, introducing an anionic group to a pigment surface by bringing the pigment and a free oxygen into contact with each other at a high temperature, or introducing an anionic group to the pigment surface by treating the pigment surface with bromine and water at normal pressure or under pressurization.

### Composite Formation

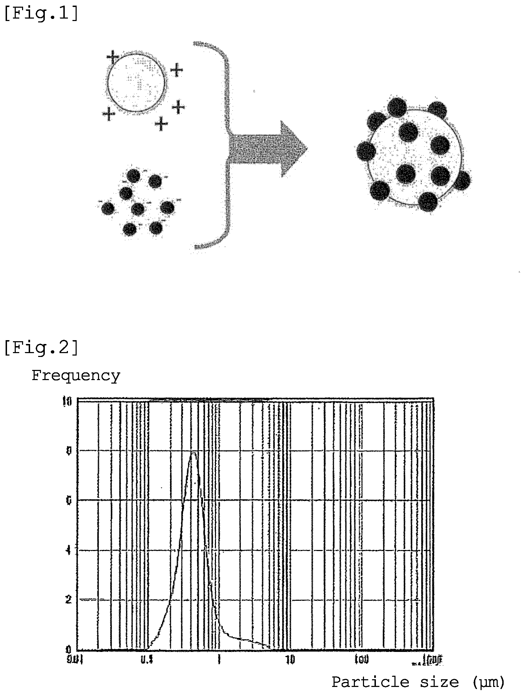

In the present invention, the composite colored particles can be produced by forming a composite of cationic resin particles with anionic pigment particles through electrostatic interaction. The schematic diagram of FIG. 1 illustrates that a composite colored particle having a large particle size is formed through electrostatic interaction to form a composite of a resin particle carrying a positive electric charge on a particle surface with pigment particles each carrying a negative electric charge on a particle surface.

The composite colored particles of the present invention are stable composite particles each having a structure in which a cationic resin particle and anionic pigment particles are bonded through electrostatic interaction.

The composite colored particles of the present invention can be produced by a composite forming process of mixing a resin emulsion containing the cationic resin particles and a pigment dispersion containing the anionic pigment particles.

A blend ratio of the cationic resin particles to the anionic pigment particles in the composite formation is, in a mass ratio of pigment particles/resin particles (excluding a water-based medium), selected from a range of preferably 0.1/1 to 50/1, more preferably 0.5/1 to 10/1, and even more preferably 1/1 to 5/1.

First, a resin emulsion containing resin particles each carrying a positive electric charge on a particle surface and a pigment dispersion containing pigment particles each carrying a negative electric charge on a particle surface are prepared. Each of the emulsions is preferably a water-based emulsion in which particles are dispersed in a water-based medium.

A medium of the water-based emulsion is preferably water, a water-soluble organic solvent, which have mutually compatibility, or a mixed solution of these. The content of the water-based medium in the resin emulsion or the pigment dispersion is preferably 1 to 50 mass%, more preferably 3 to 30 mass%, and even more preferably 5 to 20 mass%, with respect to the total amount of the emulsion.

As the water-soluble organic solvent, monohydric or polyhydric alcohols such as alkylene glycol, polyalkylene glycol, glycol ether, acetin, and diacetin, lactams such as ε-caprolactam, 2-pyrrolidone, and N-methylpyrrolidone, lactones such as ε-caprolactone and δ-valerolactone, and sulfoxides such as dimethyl sulfoxide can be used.

Among the compounds described above, a compound having a polyalcohol and a lactam structure is preferred. Specific examples of such a water-soluble organic solvent include 1,2-alkylene glycols such as 1,2-hexanediol, 2-pyrrolidone, propylene glycol, butylethylpropanediol, 1,3-butanediol, 3-methoxy-3-methyl-1-butanol, 3-methoxy-1-butanol, 1-methoxy-2-propanol, 1-ethoxy-2-propanol, 1-butoxy-2-propanol, and triethylene glycol monobutyl ether, and one type of these can be used alone, or two or more types of these can be mixed (hereinafter, referred to as "at least one") and used.

Next, the resin emulsion and the pigment dispersion are mixed. As the mixing method of the emulsions, a method in which each emulsion is charged in a container equipped with a stirring equipment, such as a mechanical stirrer or a magnetic stirrer, and then stirred can be employed. At this time, a necessary component to form an ink composition may be added.

The cationic resin and the anionic pigment contained in each of the emulsions effectively form composite colored particles each having a large particle size by being electrostatically bonded through the Coulomb force after being mixed. The composite colored particles thus obtained are particles having an extremely small content of pigment fine particles each having a particle size of less than 0.1 µm. That is effective to achieve the effect of the present invention.

At this time, a large number of composite colored particles sometimes aggregate to form a composite colored particle aggregate having an extremely large particle size of over 10 µm. An aggregate having an extremely large particle size causes a problem, such as clogging of an ink or scratch, when used for a writing instrument, and thus, a breaking-up process where the aggregate is crushed and dispersed into separated composite colored particles is preferably added.

In other words, a preferred embodiment of the method for producing composite colored particles of the present invention is a method including a composite forming process of mixing a resin emulsion containing resin particles each carrying a positive electric charge on a particle surface and a water-based medium, and a pigment dispersion containing pigment particles each carrying a negative electric charge on a particle surface and a water-based medium, and a breaking up process of crushing aggregates.

Examples of the breaking-up process of crushing aggregates having an ultra-large particle size include stirring with a stirrer such as a homomixer, a disper, a mixer, an ultra mixer, or a homogenizer. By the breaking-up process, the aggregates are crushed and transformed into separate composite colored particles and form a dispersion liquid of the composite colored particles. The particle size of the pigment particle can be controlled by adjusting stirring conditions at the time of crushing the aggregates.

In the composite colored particles of the present invention, preferably, at least 95% of the particles have a particle size in a range of 0.2 µm to 3.0 µm, and, more preferably, at least 95% of the particles have a particle size in a range of 0.2 µm to 2.0 µm. A content of fine particles, which are smaller than 0.1 µm, is less than 3%, and preferably less than 1%, as the frequency of the particles. The frequency of the particles can be measured by a dynamic light scattering method, for example, with a particle size distribution analyzer.

### Water-Based Ink Composition

The composite colored particles of the present invention are dispersed in a water-based medium with another component based on required characteristics as a writing instrument (a roller ball pen, a felt-tip pen, a calligraphy pen, a marking pen, or the like) to form a water-based ink composition for the writing instrument. Examples of such other component include a pH adjuster, a thickener, a lubricant, a corrosion inhibitor, a preservative, an antimicrobial agent, a surfactant, and a solvent as a dispersion medium.

That is, the water-based ink composition of the present invention is a water-based ink composition containing at least the composite colored particles of the present invention.

A content of the composite colored particles of the present invention in the water-based ink composition is preferably 0.1 to 50 mass%, more preferably 1 to 30 mass%, and even more preferably 3 to 20 mass%, with respect to the total amount of the ink composition, from the perspective of ensuring hue of the ink and preventing fainting during writing.

Examples of the pH adjuster for adjusting the pH of the ink composition include amines such as monoethanolamine, diethanolamine, triethanolamine, triisopropanolamine, N,N-dimethylethanolamine, N,N-diethylethanolamine, and morpholine; ureas such as urea, thiourea, and tetramethylurea; allophanates such as allophanate and methyl allophanate; biurets such as biuret, dimethylbiuret, and tetramethylbiuret; quaternary ammoniums such as tetramethylammonium hydroxide; inorganic hydroxides such as sodium hydroxide, potassium hydroxide, and lithium hydroxide; and inorganic salts such as sodium (hydrogen)carbonate, potassium (hydrogen)carbonate, and lithium (hydrogen)carbonate; and at least one type of these can be used.

As the thickener to be blended in the water-based ink composition, for example, a synthetic polymer, a cellulose derivative, or a polysaccharide can be used. Specific examples thereof include gum arabic, gum tragacanth, guar gum, locust bean gum, alginic acid, carrageenan, gelatin, xanthan gum, welan gum, succinoglycan, diutan gum, dextran, methyl cellulose, ethyl cellulose, hydroxyethyl cellulose, carboxymethyl cellulose, fermented cellulose, cellulose oxide, starch glycolic acid and salts thereof, propylene glycol ester alginate, polyvinyl alcohol, polyvinylpyrrolidone, polyvinyl methyl ether, polyacrylic acid and salts thereof, carboxyvinyl polymers, polyethylene oxide, vinyl acetate-polyvinyl pyrrolidone copolymers, crosslinked acrylic acid polymers and salts thereof, uncrosslinked acrylic acid polymers and salts thereof, and styrene-acrylic acid copolymers and salts thereof, and at least one type of these can be used.

Examples of the lubricant to be blended in the water-based ink composition include nonionic lubricants such as fatty acid esters of polyhydric alcohols, higher fatty acid esters of sugars, polyoxyalkylene higher fatty acid esters, alkyl phosphates, and alkylpolyoxyalkylene phosphates; anionic lubricants such as alkyl sulfonates of higher fatty acid amides and alkyl allyl sulfonates; fluorine-based lubricants; and silicone-based lubricants such as polyether-modified silicones.

As the corrosion inhibitor to be blended in the water-based ink composition, benzotriazole, tolyltriazole, dicyclohexylammonium nitrite, and saponins can be used. As the preservative or antimicrobial agent to be blended in the water-based ink composition, phenols, benzoic acids, benzimidazoles, isothiazolones, triazines, bronopols, thiabendazoles, zinc pyrithiones, carbendazims, and omadines can be used.

When a water-based ink composition loaded in a writing instrument is left in a state where a cap is removed, a marking at the beginning of writing may be fainted.

In contrast, in the water-based ink composition containing the composite colored particles of the present invention and a surfactant, the composite colored particles are stabilized in the medium and prevented from aggregation. This provides a good marking from the beginning of writing (starting characteristics) even in the above-described situation, which is preferable.

That is, one of preferred embodiments of the water-based ink composition of the present invention is a water-based ink composition containing at least the composite colored particles of the present invention and a nonionic surfactant or an anionic surfactant.

The surfactant to be blended is particularly preferably a nonionic surfactant or an anionic surfactant. Among them, a fluorine-based, acetylene-based, or silicone-based nonionic or anionic surfactant is preferable. A mixture of nonionic and anionic surfactants may also be blended.

Specific examples thereof include at least one (each alone or a mixture of two or more) selected from acetylene-based surfactants such as acetylene glycols, alkylene oxide adducts thereof, and acetylene alcohols, fluorine-based surfactants such as perfluoroalkyl phosphate esters, and silicone-based surfactants such as polyether-modified silicones such as polyethylene glycol adducts of dimethylpolysiloxane.

A total blended amount of the nonionic surfactant or the anionic surfactant in the total amount of the water-based ink composition is in a range of 0.01 to 10 mass%, preferably in a range of 0.1 to 8 mass%, and more preferably in a range of 0.3 to 6 mass%. When the blended amount of the surfactant is 0.01 mass% or less, it is difficult to obtain an effect of improving the starting characteristics. When the blended amount is 10 mass% or greater, feathering in a marking may be caused.

Examples of commercially available nonionic surfactants to be used include: polyoxyethylene alkyl ethers such as NIKKOL BL-21 (polyoxyethylene (21) lauryl ether), NIKKOL BL-25 (polyoxyethylene (25) lauryl ether), NIKKOL BC-15 (polyoxyethylene (15) cetyl ether), NIKKOL BC-20 (polyoxyethylene (20) cetyl ether), NIKKOL BC-23 (polyoxyethylene (23) cetyl ether), NIKKOL BC-25 (polyoxyethylene (25) cetyl ether), NIKKOL BC-30 (polyoxyethylene (30) cetyl ether), NIKKOL BC-40 (polyoxyethylene (40) cetyl ether), NIKKOL BS-20 (polyoxyethylene (20) stearyl ether), NIKKOL BO-15V (polyoxyethylene (15) oleyl ether), NIKKOL BO-20V (polyoxyethylene (20) oleyl ether), NIKKOL BO-50V (polyoxyethylene (50) oleyl ether), NIKKOL BB-20 (polyoxyethylene (20) behenyl ether), NIKKOL BB-30 (polyoxyethylene (30) behenyl ether), NIKKOL BD-10 (polyoxyethylene (10) (C12 to 15) synthetic alkyl ether) (all available from Nikko Chemicals Co., Ltd.),

Emulgen 120 (polyoxyethylene (12) lauryl ether), Emulgen 123P (polyoxyethylene (23) lauryl ether), Emulgen 130K (polyoxyethylene (41) lauryl ether), Emulgen 147 (polyoxyethylene (19) lauryl ether), Emulgen 150 (polyoxyethylene (47) lauryl ether), Emulgen 210P (polyoxyethylene (7) cetyl ether), Emulgen 220 (polyoxyethylene (13) cetyl ether), Emulgen 350 (polyoxyethylene (50) stearyl ether), Emulgen 430 (polyoxyethylene (30) oleyl ether), Emulgen 4085 (polyoxyethylene (85) monotetradecyl ether, and Emulgen 2025G (polyoxyethylene (25) octyldodecyl ether) (all available from Kao Corporation);

polyoxyethylene polyoxypropylene alkyl ethers such as PBC-34 (polyoxyethylene (20) polyoxypropylene (4) cetyl ether) and PBC-44 (polyoxyethylene (20) polyoxypropylene (8) cetyl ether) (all available from Nikko Chemicals Co., Ltd.); polyethylene glycol fatty acid esters such as NIKKOL MYS-25 (polyethylene glycol monostearate (25 ethylene oxide)), NIKKOL MYS-45 (polyethylene glycol monostearate (45 ethylene oxide)), NIKKOL MYS-55 (polyethylene glycol monostearate (55 ethylene oxide)), NIKKOL CDS-600P (polyethylene glycol distearate) (all available from Nikko Chemicals Co., Ltd.),

Emanon 3199B (polyethylene glycol monostearate (141 ethylene oxide)), Emanon 3299V (polyethylene glycol distearate (140 ethylene oxide)), and Emanon 3299RV (polyethylene glycol distearate (250 ethylene oxide)) (all available from Kao Corporation); polyoxyethylene sorbitan fatty acid esters such as NIKKOL TL-10 (polyoxyethylene (20) sorbitan monococoate), NIKKOL TP-10 (polyoxyethylene (20) sorbitan monopalmitate), NIKKOL TO-10M, NIKKOL TO-10 (polyoxyethylene (20) sorbitan monooleate), NIKKOL TI-10 (polyoxyethylene (20) sorbitan monoisostearate) (all available from Nikko Chemicals Co., Ltd.),

RHEODOL TW-L120, RHEODOL Super TW-L120 (polyoxyethylene (20) sorbitan monolaurate), RHEODOL TW-P120 (polyoxyethylene (20) sorbitan monopalmitate), and RHEODOL TWO120 (polyoxyethylene (20) sorbitan monooleate); polyoxyethylene hydrogenated castor oils such as NIKKOL HCO-80 (polyoxyethylene (80) hydrogenated castor oil) and NIKKOL HCO-100 (polyoxyethylene (100) hydrogenated castor oil) (all available from Nikko Chemicals Co., Ltd.); polyglycerin fatty acid esters such as NIKKOL Decaglyn 1-L (decaglyceryl monolaurate) (available from Nikko Chemicals Co., Ltd.);

sucrose fatty acid esters such as RYOTO Sugar Ester S-1570 (sucrose stearate), RYOTO Sugar Ester S-1670 (sucrose stearate), RYOTO Sugar Ester P-1570 (sucrose palmitate), RYOTO Sugar Ester P-1670 (sucrose palmitate), RYOTO Sugar Ester M-1695 (sucrose myristate), RYOTO Sugar Ester 0-1570 (sucrose oleate), RYOTO Sugar Ester L-1695 (sucrose laurate) (all available from Mitsubishi Chemical Foods Corporation); and Pluronic L10, Pluronic L31, Pluronic L61, Pluronic L62, Pluronic 10R5, Pluronic 17R2, Pluronic 25R2 (poly(oxyethylene)poly(oxypropylene) block copolymer) (all available from BASF Japan Ltd.),

ADEKA Pluronic L-23, ADEKA Pluronic L-31, ADEKA Pluronic L-44, ADEKA Pluronic L-61, ADEKA Pluronic L-62, ADEKA Pluronic L-64, ADEKA Pluronic L-71, ADEKA Pluronic L-72, ADEKA Pluronic L-101, ADEKA Pluronic L-121, ADEKA Pluronic P-84, ADEKA Pluronic P-85, ADEKA Pluronic P-103, ADEKA Pluronic F-68, ADEKA Pluronic F-88, and ADEKA Pluronic F-108 (polyoxyethylene polyoxypropylene condensates) (all available from ADEKA Corporation).

These nonionic surfactants can be used alone or in combination of two or more.

As commercially available anionic surfactants to be used, alkylbenzene sulfonates, polyoxyethylene alkyl ether sulfates, alkyl sulfate esters, higher alkyl sulfates, or the like can be used. Specific examples thereof include: alkyl benzenesulfonates such as Lipon LH-200, Lipon LS-250, Lipon PS-230, Lipon PS-260, Lipon PS-860 (linear alkyl (C12 to 14) sodium benzenesulfonate), Lipon LH-900 (branched alkyl (C12 to 14) benzenesulfonate), Lipolan PJ-400CJ, Lipolan LB-440, Lipolan LJ-441, K Lipolan PJ-400C (sodium α-olefin (C14) sulfonate), Lipolan LB-840, Lipolan PB-800CJ (sodium α-olefin (C14 to 18) sulfonate) (all available from Lion Corporation),

LUNOX S-40TD (triethanolamine dodecylbenzenesulfonate) (available from Toho Chemical Industries, Co., Ltd.), NEOPELEX G-15, NEOPELEX G-25, NEOPELEX G-65 (sodium dodecylbenzenesulfonate), and NEOPELEX GS (dodecylbenzenesulfonate) (available from Kao Corporation); polyoxyethylene alkyl ether sulfates such as SUNNOL LMT-1430 (sodium polyoxyethylene alkyl (C12) ether sulfate), SUNNOL TD-3130 (sodium polyoxyethylene alkyl (C13) ether sulfate) (all available from Lion Corporation), EMAL 20C, EMAL 270J, EMAL 20CM, EMAL D-3-D, EMAL D-4-D, EMAL 20T, LATEMUL E-118B, LATEMUL E-150, LATEMUL WX (sodium polyoxyethylene lauryl ether sulfate) (all available from Kao Corporation);

alkyl sulfates such as SUNNOL EH-1145M (ethanolamine alkyl (C8) sulfate), SUNNOL LM-1130 (sodium alkyl (C12) sulfate), and SUNNOL LM-1140T (triethanol amine alkyl (C12) sulfate) (all available from Lion Corporation); and

higher alkyl sulfates such as ALSCOPE LN-90PW, ALSCOPE LS-40T, ALSCOPE LS-30 (lauryl sulfate), ALSCOPE LS-25B (lauryl sulfate), ALSCOPE A-225B, ALSCOPE DA-330S, ALSCOPE N-335T, ALSCOPE NS-230, ALSCOPE TH-330K, ALSCOPE TH-370N (polyoxyethylene alkyl ether sulfates) (all available from Toho Chemical Industry Co., Ltd.), EMAL 0, EMAL 0S, EMAL 10S, EMAL 2FG, and EMAL 2F-30 (sodium laurate) (all available from Kao Corporation).

These anionic surfactants may be used alone or in combination of two or more.

In the water-based ink composition of the present invention, a dispersion medium is blended to stabilize the state of contained components and to ensure usability as an ink for a writing instrument. As the dispersion medium, water such as tap water, purified water, distilled water, ion exchanged water, or pure water, water-soluble organic solvents, or hydrophilic dispersion mediums formed of mixed solutions thereof can be used, and a mixed solution formed of water and at least one type of water-soluble organic solvents can be preferably used.

The blended amount of the water-based medium in the water-based ink composition is preferably 3 to 300 parts by mass, and more preferably 5 to 100 parts by mass, per 100 parts by mass of the composite colored particles.

As the water-soluble organic solvent, for example, alcohols, glycols, and derivatives thereof can be used. Specific examples thereof include methanol, ethanol, propanol, butanol, ethylene glycol, diethylene glycol, triethylene glycol, propylene glycol, dipropylene glycol, polyethylene glycol, 3-butylene glycol, thiodiethylene glycol, ethylene glycol monomethyl ether, ethylene glycol monobutyl ether, diethylene glycol monomethyl ether, glycerin, and diglycerin, and at least one type of these can be used. A mixed solvent in which a water-soluble organic solvent is blended in a proportion of 5 to 200 parts by mass per 100 parts by mass of water is preferred.

Furthermore, as the dispersion medium, a hydrophilic nonionic polymer can be used. As the nonionic polymer to be blended in the water-based ink composition, for example, polyethers can be used. Specific examples thereof include polypropylene glycol, polybutylene glycol, and polyoxypropylene diglyceryl ether, and at least one type of these can be used. By using these nonionic polymers as a main solvent, occurrence of aggregation over time of thermochromic microcapsules can be prevented.

As the polyethers such as polypropylene glycol and polybutylene glycol to be blended in the water-based ink composition, polyethers having various degrees of polymerization can be used. From the perspective of further exhibiting the effect of the present invention, as the polypropylene glycol, use of a polymer having a degree of polymerization of 400 to 700 (weight average) is preferred, and as the polybutylene glycol, use of a polymer having a degree of polymerization of 500 to 700 (weight average) is preferred.

The water-based ink composition for a writing instrument can be produced by, for example, blending predetermined amounts of components contained in the composite colored particles and the water-based ink composition and stirring and mixing by a stirrer, such as a homomixer or a disper. Further, coarse particles in the water-based ink composition may be removed by filtration or centrifugation, as necessary.

### Writing Instrument

The ink composition of the present invention is loaded in a writing instrument, such as a felt-tip pen, a marking pen, a calligraphy pen, or a roller ball pen. The writing instrument loaded with the ink composition of the present invention has an advantage of being excellent in writing performance such as thickness of a drawn line (marking) at the time of writing, feathering resistance, scratch resistance, and starting characteristics when writing is performed on a paper surface or the like using the writing instrument.

### Examples

The present invention will be described in further detail using examples, but the present invention is not limited to the examples and the like. Note that the unit "part(s)" in blending described below means "part(s) by mass". The particle size distribution of the resin particles and the composite colored particles was measured by a laser diffraction/scattering method with a particle size distribution analyzer (MICROTRAC HRA 9320-X100 (available from Nikkiso Co., Ltd.)). The particle size distribution of the pigment particles was measured by a dynamic light scattering method with a concentrated particle size analyzer FPAR-1000 (available from Otsuka Electronics Co., Ltd.).

### Cationic Resin Particle

As the emulsion of the cationic resin particles, a water-based emulsion of a vinyl acetate-based resin, an acrylic resin, or a urethane-based resin was used.

As the vinyl acetate-based resin emulsion, a cation-modified vinyl acetate resin emulsion (VINYBLAN 1008; available from Nissin Chemical Co., Ltd.) was used. As the acrylic resin emulsion, a cation-modified polyvinyl alcohol-acrylic resin emulsion (MOWINYL 6950; available from Japan Coating Resin Co., Ltd.) was used. As the urethane-based resin emulsion, a cation-modified urethane emulsion (SUPERFLEX 620; available from DKS Co., Ltd.) was used. For comparison, a nonionic modified vinyl acetate-based resin emulsion (VINYBLAN 1002; available from Nissin Chemical Co., Ltd.) was used.

### Anionic Pigment Particle

As the anionic pigment dispersion, water-based emulsions of anionic carbon black or organic pigment obtained by methods of the following Reference Examples 1 to 4 were used.

### Reference Example 1

Pigment: Carbon black (MCF88; available from Mitsubishi Chemical Corporation) 10 mass%
Dispersing agent: α-Methylstyrene-acrylic copolymer (Joncryl 61J, available from Johnson, 30 mass% aqueous solution) 10 mass%
pH Adjuster: Aminomethyl propanol 0.1 mass%
Viscosity modifier: Polyvinylpyrrolidone 5 mass%
Water-soluble organic solvent: Propylene glycol monoethyl ether 5 mass%
Water: Purified water 69.9 mass%

In a container, water, a water-soluble organic solvent, a viscosity modifier, a pH adjuster, a dispersing agent, and a pigment were successively added in the blended proportions described above and pre-mixed for 2 hours with a stirrer. Dispersing treatment was performed by a 1 mm zirconia beads mill, so that impurities were removed by centrifugal separation, then filtration under reduced pressure was performed with a microfilter (pore size: 5.0 µm; available from Millipore). Thus, an emulsion of anion-modified carbon black particles 1 of pH 8.9 was obtained. The average particle size of the anion-modified carbon black particles 1 was 0.1 µm.

### Reference Example 2

Self-dispersion type carbon black (CAB-O-JET200; available from Cabot Specialty Chemicals Inc.) in which an acidic group was provided on a surface of carbon black was dispersed in an aqueous aminomethyl propanol solution. Thus, an emulsion of anion-modified carbon black particles 2 of pH 8.5 was obtained.

### Reference Example 3

Pigment: Phthalocyanine blue 5187 (available from Dainichiseika Color & Chemicals Mfg. Co., Ltd.) 10 mass%
Dispersing agent: α-Methylstyrene-acrylic copolymer (Joncryl 63J, available from BASF, 30 mass% aqueous solution) 10 mass%
pH Adjuster: Aminomethyl propanol 0.1 mass%
Viscosity modifier: Polyvinylpyrrolidone 5 mass%
Water-soluble organic solvent: Propylene glycol monoethyl ether 5 mass%
Water: Purified water 69.9 mass%

In a container, water, a water-soluble organic solvent, a viscosity modifier, a pH adjuster, a dispersing agent, and a pigment were successively added in the blended proportions described above and pre-mixed for 2 hours with a stirrer. Dispersing treatment was performed by a 1 mm zirconia beads mill, impurities were removed by centrifugal separation, then filtration under reduced pressure was performed with a microfilter (pore size: 5.0 µm; available from Millipore). Thus, an emulsion of anion-modified phthalocyanine blue particles of pH 8.9 was obtained.

### Reference Example 4

Pigment: Carbon black (MCF88; available from Mitsubishi Chemical Corporation) 10 mass%
pH Adjuster: Aminomethyl propanol 0.1 mass%
Viscosity modifier: Polyvinylpyrrolidone 5 mass%
Water-soluble organic solvent: Propylene glycol monoethyl ether 5 mass%
Water: Purified water 79.9 mass%

In a container, water, a water-soluble organic solvent, a viscosity modifier, a pH adjuster, and a pigment were successively added in the blended proportions described above and pre-mixed for 2 hours with a stirrer. Dispersing treatment was performed by a 1 mm zirconia beads mill, impurities were removed by centrifugal separation, then filtration under reduced pressure was performed with a microfilter (pore size: 5.0 µm; available from Millipore).Thus, an emulsion of unmodified carbon black particles of pH 8.9 was obtained.

### Examples 1 to 6 and Comparative Examples 1 and 2

The cationic resin particle emulsions described above and the anionic pigment dispersions produced in Reference Examples were each blended in the combination and the mass ratio (mass ratio of solid content) listed in Table 1 and mixed with a stirrer. Next, breaking-up was performed by strongly stirring with a homomixer. Thus, emulsions A-1 to A-6 containing the composite colored particles of the present invention and emulsions C-1 to C-2 as Comparative Examples were obtained.

**[Table 1]**

| Composition of composite colored particle | | | | | | | | | (part by mass) | |
|---|---|---|---|---|---|---|---|---|---|---|
| | | | Examples | | | | | | Comparative Examples | |
| | | | 1 | 2 | 3 | 4 | 5 | 6 | 1 | 2 |
| Cationic resin particle | Cation-modified vinyl acetate-based resin | | 5 | 2 | | | | | | 5 |
| | Cation-modified acrylic resin | | | | 4 | 8 | | | | |
| | Cation-modified urethane-based resin | | | | | | 3 | 5 | | |
| | Nonionic modified vinyl acetate-based resin | | | | | | | | 5 | |
| Anionic pigment particle | Anion-modified carbon black particle 1 | | 10 | | 12 | | | | 10 | |
| | Anion-modified carbon black particle 2 | | | 15 | | | 14 | | | |
| | Anion-modified phthalocyanine blue particle | | | | | 5 | | 6 | | |
| | Unmodified carbon black particle | | | | | | | | | 10 |
| Composite colored particle | | Number | A-1 | A-2 | A-3 | A-4 | A-5 | A-6 | C-1 | C-2 |

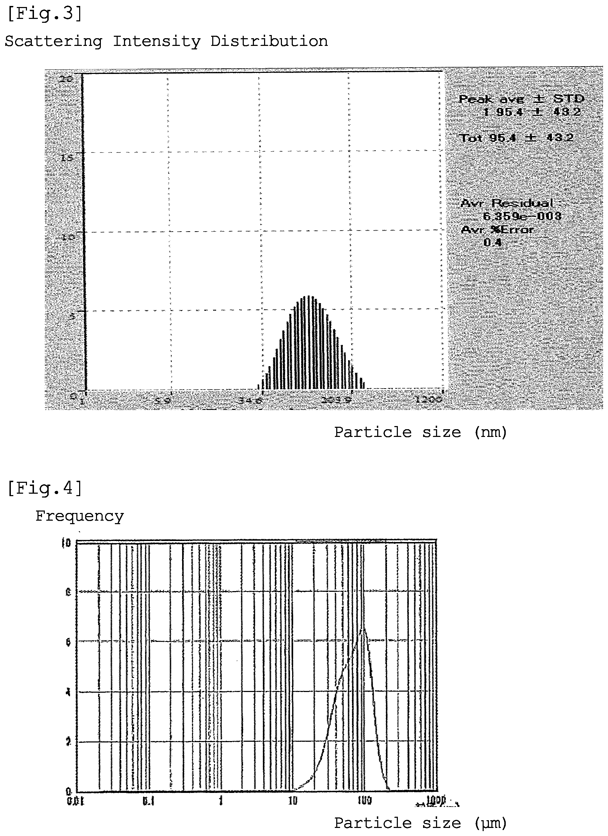

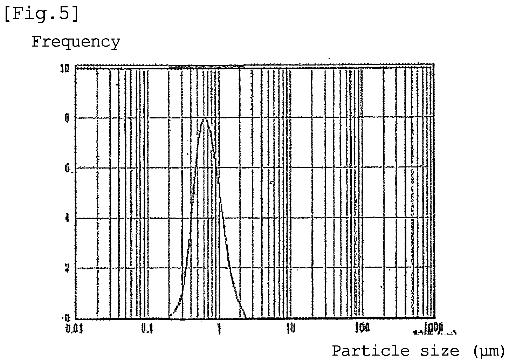

The frequency distribution diagram of the particle sizes of the cation-modified vinyl acetate resin used in Example 1 is shown in FIG. 2, and the frequency distribution diagram of the particle sizes of the anion-modified carbon black particles is shown in FIG. 3. Similarly, the frequency distribution diagram of the particle sizes of the composite colored particles before performing the breaking-up in Example 1 is shown in FIG. 4, and the frequency distribution diagram of the particle sizes of the composite colored particles A-1 after performing the breaking-up operation thereto is shown in FIG. 5. From these diagrams, it is apparent that the carbon black pigment used as a raw material contains a large amount of pigment particles having a small particle size, whereas the composite colored particles obtained in the present invention contain few pigment particles having a small particle size.

Table 2 shows results obtained by calculating a frequency of the composite colored particles having a particle size in a specific range with respect to the entire composite colored particles, from the frequency distribution diagram of the particle sizes measured by the above-described method for the composite colored particles produced in each of Examples 1 to 6 and Comparative Examples 1 and 2.

**[Table 2]**

| Frequency of composite colored particles in specific particle size range | | | | | | | | |
|---|---|---|---|---|---|---|---|---|
| Particle size Range | Examples | | | | | | Comparative Examples | |
| | A-1 | A-2 | A-3 | A-4 | A-5 | A-6 | C-1 | C-2 |
| 0.2 µm to 3.0 µm | 99% | 99% | 99% | 98% | 98% | 98% | 90% | 90% |
| 0.2 µm to 2.0 µm | 97% | 97% | 96% | 96% | 96% | 96% | 85% | 85% |
| Less than 0.1 µm | 0.10% | 0.10% | 0.10% | 0.20% | 0.30% | 0.50% | 4.00% | 5.00% |

### Examples 11 to 19 and Comparative Examples 11 and 12

With each of the emulsions containing the composite colored particles A-1 to A-6 or the emulsions containing the composite colored particles C-1 and C-2 as Comparative Examples, a pH adjuster, a thickener, a lubricant, a corrosion inhibitor, a preservative, and a dispersion medium were blended in the combination and the weight ratio listed in Table 3 and mixed, some aggregates were filtered. Thus, an ink composition was prepared.

Each of the ink compositions of Examples 11 to 19 is one type of embodiments of the water-based ink composition of the present invention. The ink composition of Comparative Example 11 is a comparative example using no cationic resin particle, and the ink composition of Comparative Example 12 is a comparative example using no anionic pigment particle.

### Evaluation of Ink Composition

A felt-tip pen was produced with each of the prepared ink compositions. Specifically, in a commercially available felt-tip pen (product name: PROCKEY PM-120T; available from Mitsubishi Pencil Co., Ltd., fine point + extra fine point), each of the ink compositions produced in Examples 1 to 8 and Comparative Examples 1 to 5 was filled, and thus a felt-tip pen was produced. With the fine point side of each of the produced felt-tip pens, writing performances such as the thickness of a drawn line (marking) at the time of writing, a feathering resistance, scratch resistance, and starting characteristics were evaluated by the following methods. The results are shown in Table 3.

### 1) Thickness of Drawn Line

### 1-1) Writing on Paper

With each of the felt-tip pens, a spiral was hand drawn on a surface of a writing paper which was in conformity with ISO standards. Then the thickness of the drawn line was evaluated based on the following criteria by visually observing the surface of the paper.

### 1-2) Writing on Cloth

With each of the felt-tip pens, the characters "*Mitsubishi Pencil"* was hand-written on a surface of a cotton cloth (Kanakin No. 3; for dye colour fastness test of JIS (in conformity with JIS L 0803). Then, the thickness of the drawn line was evaluated based on the following criteria by visually observing the surface of the cloth.

Evaluation Criteria for Drawn Line:
A: The color of the drawn line was outstandingly thick.
B: The color of the drawn line was thick.
C: The color of the drawn line was slightly faint.
D: The color of the drawn line was significantly faint.

### 2) Feathering Resistance

### 2-1) Feathering on Paper

With each of the felt-tip pens, a spiral was hand drawn on a surface of a writing paper that was in conformity with ISO standards, and then the feathering condition of the drawn line was evaluated based on the following criteria by visually observing the surface of the paper.

### 2-2) Feathering on Cloth

With each of the felt-tip pens, the characters "*Mitsubishi Pencil"* was hand-written on a surface of a cotton cloth (Kanakin No. 3; for dye-colour fastness test of JIS (in conformity with JIS L 0803). Then, the feathering condition of the drawn line was evaluated based on the following criteria by visually observing the surface of the cloth.

### Evaluation Criteria for Feathering Condition:

A: No feathering of the drawn line was observed.
B: Slight feathering of the drawn line was observed.
C: Considerable feathering of the drawn line was observed.
D: Outstanding feathering of the drawn line was observed.

### 3) Scratch Resistance

With each of the felt-tip pens, the characters "*Mitsubishi Pencil"* was hand-written on a surface of coated paper (available from Yupo Corporation), and then the marking was dried. A paper wiper (Kimwipes; available from Nippon Paper Crecia Co., Ltd.) was placed on this marking, a weight of 500 g was placed thereon, and the marking was rubbed by moving horizontally the paper wiper together with the weight back and forth for five times. The condition of the marking thereafter was evaluated based on the following criteria.

### Evaluation Criteria for Scratch Resistance:

A: No defects occurred in the marking.
B: One or two defects of a thin line occurred in the marking.
C: Clear defects occurred in the marking.
D: Significant defects occurred to the degree that made it difficult to read the characters.

### 4) Starting characteristics

After each of the felt-tip pens was left without a cap for 1 week at 25°C and 60% RH, a straight line was drawn on PPC paper, and the starting characteristics was evaluated on the basis of the following evaluation criteria.

### Evaluation Criteria for Starting characteristics:

A: Writable without ink faint from beginning of writing
B: Ink faint of less than 10 mm observed from beginning of writing
C: Ink faint of 10 mm or greater observed from beginning of writing

As is clear from Examples in Table 3, the ink compositions in which the composite colored particles of the present invention were blended exhibited excellent writing performances in thickness of the drawn line (marking) at the time of writing, feathering resistance, scratch resistance, and starting characteristics.

**[Table 3]**

| | | | | | | | | | | (part by mass) | | |
|---|---|---|---|---|---|---|---|---|---|---|---|---|
| Water-based ink composition | | Examples | | | | | | | | | Comparative Examples | |
| Component | Details | 11 | 12 | 13 | 14 | 15 | 16 | 17 | 18 | 19 | 11 | 12 |
| Composite colored particle | A-1 | 8 | 3 | 12 | | | | | | | | |
| | A-2 | | | | 5 | 10 | | | | | | |
| | A-3 | | | | | | 4 | | | | | |
| | A-4 | | | | | | | 10 | | | | |
| | A-5 | | | | | | | | 8 | | | |
| | A-6 | | | | | | | | | 6 | | |
| | C-1 | | | | | | | | | | 8 | |
| | C-2 | | | | | | | | | | | 8 |
| pH Adjuster | Triethanolamine | 0.1 | 0.1 | 0.1 | 0.1 | 0.1 | 0.1 | 0.1 | 0.1 | 0.1 | 0.1 | 0.1 |
| Thickener | Xanthan gum | 0.3 | 0.3 | 0.3 | 0.3 | 0.3 | 0.3 | 0.3 | 0.3 | 0.3 | 0.3 | 0.3 |
| Lubricant | Phosphate ester *1 | 0.3 | 0.3 | 0.3 | 0.3 | 0.3 | 0.3 | 0.3 | 0.3 | 0.3 | 0.3 | 0.3 |
| Corrosion inhibitor | Benzotriazol | 0.3 | 0.3 | 0.3 | 0.3 | 0.3 | 0.3 | 0.3 | 0.3 | 0.3 | 0.3 | 0.3 |
| Preservative | Benzoisothiazolone | 0.3 | 0.3 | 0.3 | 0.3 | 0.3 | 0.3 | 0.3 | 0.3 | 0.3 | 0.3 | 0.3 |
| Dispersion medium | Glycerin | 10 | | 8 | | | 5 | 10 | 2 | 10 | 10 | 10 |
| | Propylene glycol | | | 2 | | | 5 | | 8 | | | |
| | Purified water | 80.7 | 95.7 | 76.7 | 93.7 | 88.7 | 84.7 | 78.7 | 80.7 | 82.7 | 80.7 | 80.7 |
| Writing performance evaluation | Thickness in drawn line (paper) | A | A | A | A | A | A | A | A | A | D | D |
| | Thickness in drawn line (cloth) | A | A | A | A | A | A | A | A | A | D | D |
| | Feathering resistance (paper) | A | A | A | A | A | A | A | A | A | D | D |
| | Feathering resistance (cloth) | A | A | A | A | A | A | A | A | A | D | D |
| | Scratch resistance | A | A | A | A | A | A | A | A | A | D | D |
| | Starting characteristics | B | B | B | B | B | B | B | B | B | C | B |
| *1 Polyoxyethylene lauryl ether phosphate (available from Toho Chemical Industry Co., Ltd.; RB-410) | | | | | | | | | | | | |

### Examples 20 to 24 and Comparative Examples 13 to 14

With the composite colored particles A-1, a pH adjuster, a thickener, a lubricant, a corrosion inhibitor, a preservative, and a dispersion medium, various surfactants were blended in the combination and the weight ratio listed in Table 4 and mixed, some aggregates were filtered. Thus, an ink composition was prepared.

The surfactants used are as follows.
Example 20: Acetylene-based nonionic surfactant (available from Nissin Chemical Industry Co., Ltd.; SURFYNOL 104)
Example 21: Fluorine-based nonionic surfactant (available from Chemours Company; Capstone FS-10)
Example 22: Silicone-based nonionic surfactant (available from Shin-Etsu Chemical Co., Ltd.; KF-6011)
Example 23 and Comparative Example 13: Polyoxyethylene alkyl ether sulfate type anionic surfactant (available from DKS Co., Ltd.; HITENOL NF-13)
Example 24: Polyoxyethylene distyrenated phenyl ether type nonionic surfactant (available from Kao Corporation ; Emulgen A-90) Comparative Example 14: Quaternary ammonium salt type cationic surfactant (available from Lion Specialty Chemicals Co., Ltd.; Lipocard 16-29)

A felt-tip pen was produced in the same manner as in the above-described Examples with each of the prepared ink compositions, and writing performances such as the thickness of a drawn line (marking) at the time of writing, a feathering resistance, scratch resistance, and starting characteristics were evaluated. The results are shown in Table 4.

Each of the ink compositions of Examples 20 to 24 is one of embodiments of the water-based ink composition of the present invention. The ink composition of Comparative Example 13 is a comparative example in which the blended amount of the surfactant is excessive, and the ink composition of Comparative Example 14 is a comparative example in which a cationic surfactant is used as the surfactant.

As is clear from Examples in Table 4, the ink compositions containing the composite colored particles of the present invention and an anionic surfactant or a nonionic surfactant as a surfactant in an appropriate amount exhibited extremely good writing performance in terms of the thickness of the drawn line (marking) at the time of writing, the feathering resistance, the scratch resistance, and the starting characteristics.

**[Table 4]**

| | | | | | | (part by mass) | | |
|---|---|---|---|---|---|---|---|---|
| Water-based ink composition | | Examples | | | | | Comparative Examples | |
| Component | Details | 20 | 21 | 22 | 23 | 24 | 13 | 14 |
| Composite colored particle | A-1 | 8 | 8 | 8 | 8 | 8 | 8 | 8 |
| pH Adjuster | Triethanolamine | 0.1 | 0.1 | 0.1 | 0.1 | 0.1 | 0.1 | 0.1 |
| Thickener | Xanthan gum | 0.3 | 0.3 | 0.3 | 0.3 | 0.3 | 0.3 | 0.3 |
| Lubricant | Phosphate ester *1 | 0.3 | 0.3 | 0.3 | 0.3 | 0.3 | 0.3 | 0.3 |
| Corrosion inhibitor | Benzotriazol | 0.3 | 0.3 | 0.3 | 0.3 | 0.3 | 0.3 | 0.3 |
| Preservative | Benzoisothiazone | 0.3 | 0.3 | 0.3 | 0.3 | 0.3 | 0.3 | 0.3 |
| Surfactant | Acetylene-based nonionic surfactant | 1 | | | | | | |
| | Fluorine-based nonionic surfactant | | 0.5 | | | | | |
| | Silicone-based nonionic surfactant | | | 0.5 | | | | |
| | Anionic surfactant | | | | 5 | | 11 | |
| | Nonionic surfactant | | | | | 1 | | |
| | Cationic surfactant | | | | | | | 0.5 |
| Dispersion medium | Glycerin | 10 | 10 | 10 | 10 | 10 | 10 | 10 |
| | Propylene glycol | | | | | | | |
| | Purified water | 79.7 | 80.2 | 80.2 | 75.7 | 79.7 | 69.7 | 80.2 |
| Writing performance evaluation | Thickness in drawn line (paper) | A | A | A | A | A | B | D |
| | Thickness in drawn line (cloth) | A | A | A | A | A | B | D |
| | Feathering resistance (paper) | B | A | A | A | A | D | B |
| | Feathering resistance (cloth) | A | A | A | A | A | B | D |
| | Scratch resistance | A | A | A | A | A | B | D |
| | Starting characteristics | A | A | A | A | A | B | C |
| *1 Polyoxyethylene lauryl ether phosphate (available from Toho Chemical Industry Co., Ltd.; RB-410) | | | | | | | | |

### Industrial Applicability

According to the present invention, it is possible to industrially advantageously produce composite colored particles having excellent usability and an ink composition containing the same. The ink composition of the present invention can be suitably used for uses in writing instruments, such as a felt-tip pen and a roller ball pen.

## Claims

1. Composite colored particles, each comprising a resin particle carrying a positive electric charge on a particle surface and a pigment particle carrying a negative electric charge on a particle surface, the resin particle and the pigment particle forming a composite through electrostatic interaction.

2. The composite colored particles according to claim 1, wherein at least 95% of the composite colored particles have a particle size within a range of 0.2 um to 3.0 µm.

3. The composite colored particles according to claim 1 or 2, wherein the resin particle comprises a polymer modified with a cationic group.

4. The composite colored particles according to claim 3, wherein the polymer is at least one type selected from the group consisting of an acrylic resin; a vinyl acetate-based resin, and a urethane-based resin.

5. The composite colored particles according to any one of claims 1 to 4, wherein the pigment particle comprises a solid pigment modified with an anionic group.

6. A water-based ink composition comprising the composite colored particles described in at least any one of claims 1 to 5.

7. The water-based ink composition according to claim 6, further comprising a nonionic surfactant or an anionic surfactant.

8. A writing instrument comprising the water-based ink composition described in claim 6 or 7.

9. A method for producing composite colored particles, the method comprising a composite forming process of mixing a resin emulsion containing resin particles each carrying a positive electric charge on a particle surface and a pigment dispersion containing pigment particles each carrying a negative electric charge on a particle surface.

10. The method for producing composite colored particles according to claim 9, wherein at least 95% of the composite colored particles have a particle size within a range of 0.2 um to 3.0 µm.

11. The method for producing composite colored particles according to claim 9 or 10, wherein at least 95% of the resin particles have a particle size within a range of 0.1 to 1.5 um and at least 95% of the pigment particles have a particle size within a range of 0.01 to 0.2 um.
